# EUROPEAN PATENT APPLICATION

(11) **EP 1 713 252 A1**
(43) Date of publication of application: **18.10.2006**
(21) Application number: 04704245.2
(22) Date of filing: 22.01.2004
(51) Int. Cl.: H04N 5/00

(54) **INTEGRATED CIRCUIT FOR THE PROCESSING AND SUBSEQUENT ROUTING OF MOTION PICTURE EXPERT GROUP (MPEG) DATA BETWEEN INTERFACES**

(71) Applicant: Semiconductores Investigacion Y Diseno S.A. -(SIDSA), 28760 Madrid (ES)
(72) Inventor: Isenser Farre, Jose, Maria, E-28760 Madrid (ES); Santos Pérez, Carlos, E-28760 Madrid (ES); Avellano Fernandez, José, Luis, E-28760 Madrid (ES); Moran Carrera, Javier, E-28760 Madrid (ES)
(74) Representative: Kritzenberger & Zeuner
(86) International application number: PCT/ES2004/000029
(87) International publication number: WO 2005/071943

(57) **Abstract**

Circuit integrated into a receiver system for digital television networks that processes and routes the data from one or various MPEG (Motion Picture Expert Group) data streams between two or more interfaces or peripherals, by using and embedded processor (PROC) and an internal common bus (BUS).

The integrated circuit that constitutes this invention will integrate at least the following peripherals:
- 2 MPEG data stream input interfaces (ITSINA and ITSINB)
- 2 MPEG data stream output interfaces (ITSOUTA and ITSOUTB)
- Hard disk interface (IHD)
- Local network interface (ILAN)
- 2 smart card interfaces (ISMCA and ISMCB)
- Generic master interface to external slave peripherals and external memory (IMB)
- Generic slave interface from another external master device (ISB)

## Description

### Objective of the invention

The invention presented consists of a single integrated circuit that processes the data from one or several MPEG (Motion Picture Expert Group) data streams with different aim or purpose, considering that, depending on the situation in which the circuit is integrated, the interfaces and outside environment are very different. The adaptation to either application is personalized by a programmable and embedded hardware and software configuration.

This circuit would be integrated in a receiver system for digital television networks (satellite, terrestrial or cable), based on the digital video broadcasting (DVB) and common interface (DVB-CI) standard, DBV-CI EN50221, and on the distribution on local networks and video recording and play (PVR).

### State of the art

This invention follows the standards established by various international entities, such as DVB (Digital Video Broadcasting) and ETSI (European Telecommunication Standard Institute) in relation to the multimedia data hiding (video, audio and data) following the MPEG (Motion Picture Expert Group) standard, ISO/IEC 13818-1 system.

### Explanation of the invention

The circuit that constitutes this invention is able to incorporate and adapt to the aforementioned standards due to a hardware and software configuration executed by an embedded processor (PROC) that programs the processing and subsequent routing between MPEG (Motion Picture Expert Group) data interfaces. Said programming is physically executed through a common internal bus (BUS).

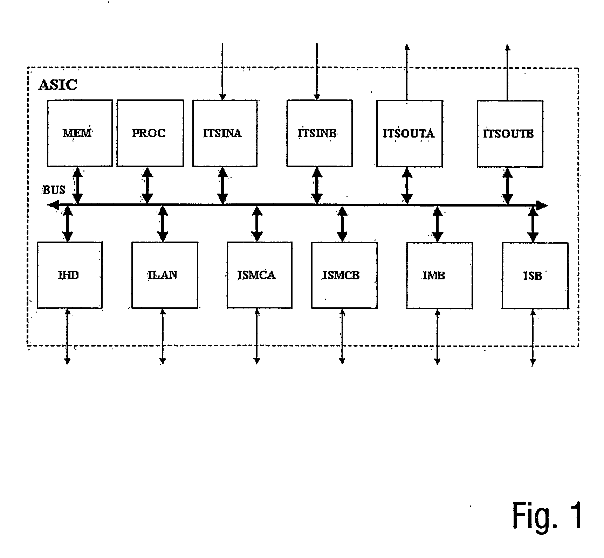

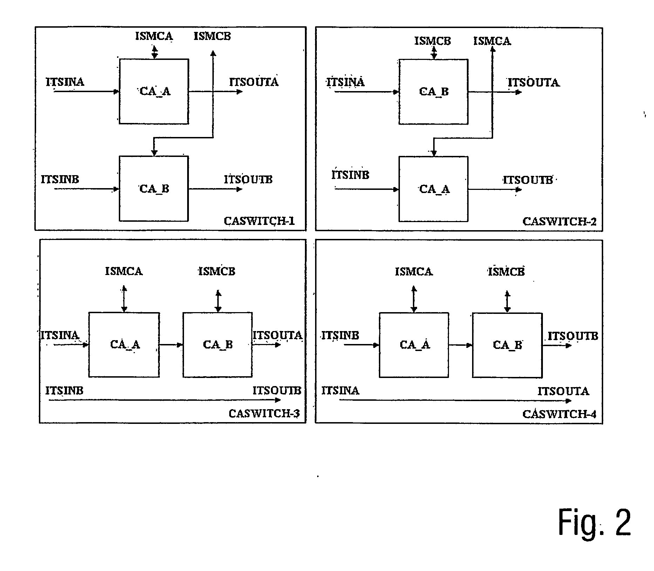

The transactions and information transfer between the various blocks and through said bus would be performed by the peripherals on its own initiative by direct access, or else by the internal processor (PROC) (Figure 1). In both cases, the data route configuration information will reside in internal memories (MEM) that can be volatile or non-volatile. Even tough it can incorporate other peripherals, the integrated circuit that is the object of this invention will integrate at least the following:
- 2 MPEG data stream input interfaces (ITSINA and ITSINB)
- 2 MPEG data stream output interfaces (ITSOUTA and ITSOUTB)
- Hard disk interface (IHD)
- Local network interface (ILAN)
- 2 smart card interfaces (ISMCA and ISMCB)
- Generic master interface to external slave peripherals and external memory (IMB)
- Generic slave interface from another external master device (ISB)

### Functionalities

The defined circuit has a minimum number of functionalities that can be programmed in hardware or software, but they are always included and available within the integrated circuit referred to in this invention; in addition, they are closely related to the aforementioned interfaces. Therefore, the functionalities of the invention are as follows:
1. Conditional access to protected contents from the data stream (CA)
2. Switching module between various conditional accesses (CASWITCH)
3. Data stream switching (SWAPTS). It is a function with two data stream inputs (TSA, TSB) and two data stream outputs that, depending on the selection logic, can be (TSA, TSA), (TSA, TSB), (TSB, TSB) or (TSB, TSA).
4. Data stream selector (SELTS). It is a function with two data stream inputs (TSA, TSB) and one output that, depending on the selection logic, can be TSA or TSB.
5. Data stream to hard disk gateway (TS2HD)
6. Hard disk to data stream gateway (HD2TS)
7. Data stream to local network gateway (TS2LAN). This module includes data stream multiplexing and concentrating functions over local networks.
8. Local network to data stream gateway (LAN2TS). This module includes hidden data stream demultiplexing and selection functions over local networks.
9. Internal self-generation of data streams (AG2TS)

### Configurations of the invention

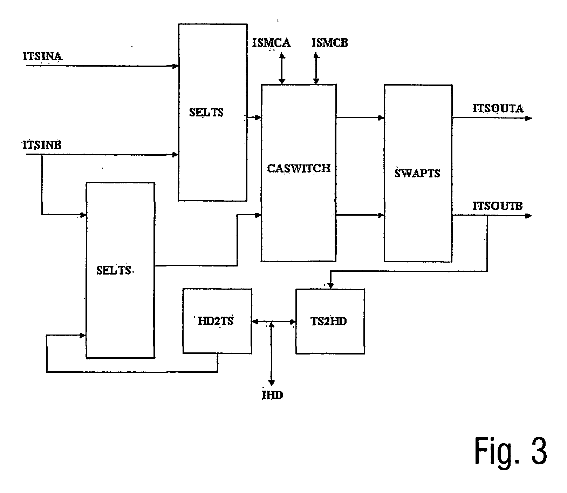

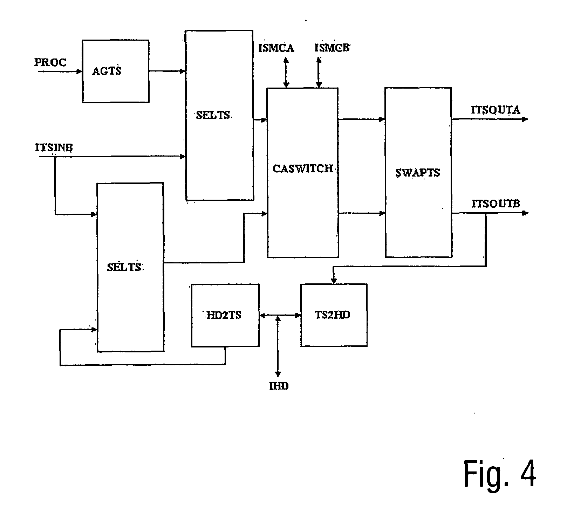

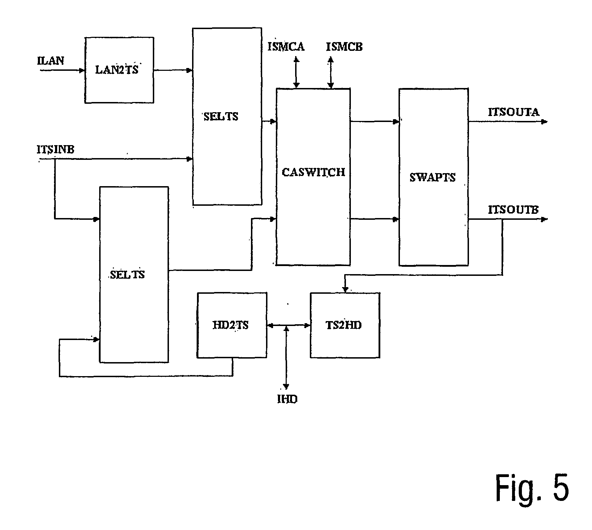

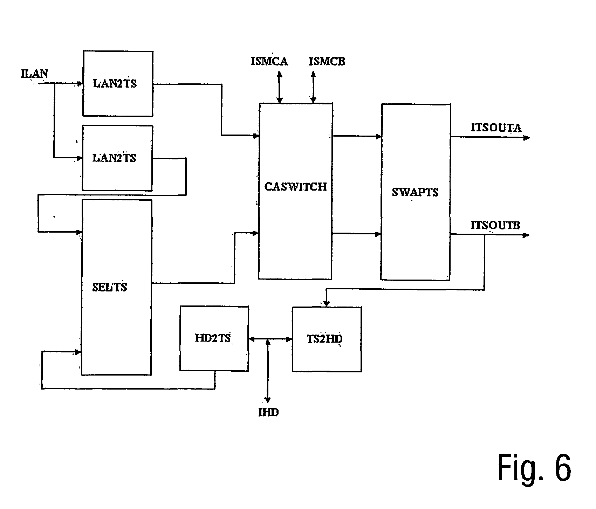

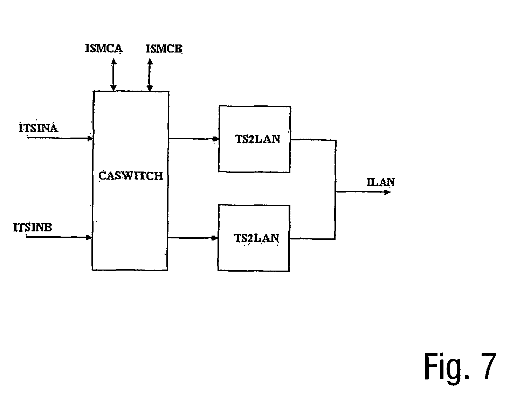

Due to the architecture programmability, it is possible to combine and route the peripherals with the functions in various configurations; the following are of special interest to the invention:
Configuration 1 (Figure 3): Processing of two input data streams (ITSINA and ITSINB) to two output data streams (ITSOUTA and ITSOUTB) with possibility of independent or combined conditional access (CASWITCH), and with the possibility of recording to hard disk (TS2HD) and reproduction from hard disk (HD2TS). Such recording and reproduction can be simultaneous, being able to record one of the external data streams while reproducing from the hard disk to one of the output data streams.
Configuration 2 (Figure 4): Processing of one input data stream (ITSINB) and one internally-synthesized data stream from the processor (PROC) to two output data streams (ITSOUTA and ITSOUTB) with possibility of independent or combined conditional access (CASWITCH), and with the possibility of recording to hard disk (TS2HD) and reproduction from hard disk (HD2TS). Such recording and reproduction can be simultaneous, being able to record one of the external data streams while reproducing from the hard disk to one of the output data streams.
Configuration 3 (Figure 5): Processing of one input data stream (ITSINB), and one data stream from a local network access (ILAN), to two output data streams (ITSOUTA and ITSOUTB) with possibility of independent or combined conditional access (CASWITCH), and with the possibility of recording to hard disk (TS2HD) and reproduction from hard disk (HD2TS). Such recording and reproduction can be simultaneous, being able to record one of the external data streams while reproducing from the hard disk to one of the output data streams.
Configuration 4 (Figure 6): Processing of two data streams, both from a local network connection (ILAN), to two output data streams (ITSOUTA and ITSOUTB) with possibility of independent or combined conditional access (CASWITCH), and with the possibility of recording to hard disk (TS2HD) and reproduction from hard disk (HD2TS). Such recording and reproduction can be simultaneous, being able to record one of the external data streams while reproducing from the hard disk to one of the output data streams.
Configuration 5 (Figure 7): Processing of two input data streams (ITSINA and ITSINB) to a local network concentrator/multiplexor (ILAN) with possibility of independent or combined conditional access (CASWITCH).
Configurations 1 to 4 are typical of receiver systems, while No. 5 is a configuration associated with video, audio and data server systems.

## Claims

1. Circuit integrated in a receiver system for digital television networks, **characterized by** the fact that it can process the flow of data from one or several MPEG data streams with different functions so that it adapts to receiver applications and to multimedia information servers (video, audio and data).

2. The circuit that constitutes this invention is **characterized by** its versatility since it incorporates a single internal bus structure in which the transactions may be originated by the processor embedded into the circuit or by the peripherals.

3. In addition, the circuit that constitutes this invention is **characterized by** the fact that it incorporates subsystems with routing and processing functions implemented by hardware and software, and used as modules that comprise the possible circuit configurations.

4. The invention is **characterized by** a specific switching function between two or more conditional access systems. Even though it has been described for the case of 2 conditional accesses over 2 independent data streams, the current claim can be extrapolated to any number of conditional accesses and data screams.

5. The invention is **characterized by** the fact that is it easily configurable, allowing at least the following functionalities: 1 - Processing of two input data streams to two output data streams; 2 - Processing of one input data stream (ITSINB) and one internally-synthesized data stream from the processor (PROC) to two output data streams; 3 - Processing of one input data stream (ITSINB), and one data stream from a local network access (ILAN), to two output data streams; 4 - Processing of two data streams, both from a local network connection (ILAN), to two output data streams; and 5 - Processing of two input data streams (ITSINA and ITSINB) to a local network concentrator/multiplexor.
